Europäisches Patentamt

European Patent Office

Office européen des brevets

(19)

(11) Publication number: **0 430 654 B1**

# EUROPEAN PATENT SPECIFICATION

(45) Date of publication of patent specification: **25.01.95**   (51) Int. Cl.⁶: **A61C 7/12**, C04B 35/10

(21) Application number: **90312900.5**

(22) Date of filing: **28.11.90**

The file contains technical information submitted after the application was filed and not included in this specification

(54) **Orthodontic bracket and process for its production.**

(30) Priority: **29.11.89 JP 307512/89**

(43) Date of publication of application:
**05.06.91 Bulletin 91/23**

(45) Publication of the grant of the patent:
**25.01.95 Bulletin 95/04**

(84) Designated Contracting States:
**CH DE FR GB LI NL**

(56) References cited:
**EP-A- 0 284 418**
**EP-A- 0 337 309**
**WO-A-89/08085**
**US-A- 4 323 545**

**CERAMICS INTERNATIONAL, vol. 14, no. 3, 1988, pages 191-194, Barking, GB; J.-W. MIN et al.: "Effect of pretreatment sintering temperature on the densification of A1203 and A1203-ZrO2 ceramics by sinter plus HIP"**

(73) Proprietor: **Tosoh Corporation**
**4560, Kaisei-cho**
**Shinnanyo-shi,**
**Yamaguchi-ken (JP)**

(72) Inventor: **Arakawa, Toshihiko**
**4501 Totsuka-cho,**
**Totsuka-ku**
**Yokohama-shi,**
**Kanagawa-ken (JP)**
Inventor: **Akiyama, Takashi**
**434 Kotta**
**Tama-shi,**
**Tokyo (JP)**
Inventor: **Nagasaki, Yuichi**
**4501 Totsuka-cho,**
**Totsuka-ku**
**Yokohama-shi,**
**Kanagawa-ken (JP)**
Inventor: **Kosugi, Naoki**
**2600 Kozukue-cho,**
**Kouhoku-ku**
**Yokohama-shi,**
**Kanagawa-ken (JP)**

(74) Representative: **Kearney, Kevin David Nicholas et al**
**KILBURN & STRODE**
**30 John Street**
**London, WC1N 2DD (GB)**

EP 0 430 654 B1

**Description**

The present invention relates to an orthodontic bracket made of an alumina ceramic having excellent appearance.

In recent years, orthodontic brackets made of single crystal sapphire (U.S.-A-4,639,218) or alumina ceramics (U.S.-A-4,219617) have been developed.

Such alumina ceramics have excellent rigidity, and slippage between the bracket and a wire. However, orthodontic brackets made of a single crystal sapphire have to be prepared by cutting and grinding operations and consequently are expensive. When a powder material is used, it can be moulded into a desired shape by an injection moulding method, followed by sintering.

EP-A-284418 discloses producing a ceramic body of alumina from fine alumina powder by injection moulding to shape and then sintering in air at a maximum temperature of 1,295 °C and then hot isostatically pressed at 1,000 to 2,000 atmospheres and 1,300 to 1,310 °C.

WO-A-8908085 discloses producing an orthodontic bracket from a somewhat fragile green compact by heating in air at 1,300 to 1,400 °C followed by sintering in flowing high purity hydrogen at 1,750 to 1,850 °C.

However, a product having improved translucence required to provide a good appearance when mounted on a tooth tends to be poor in strength. On the other hand, a product having a high strength tends to be poor in translucence. Even among sintered products, there has been no product which is excellent in both translucence and strength.

It is an object of the present invention to overcome such difficulties and to provide a translucent ceramic bracket which is excellent in both strength and outer appearance and which provides good slippage in contact with metal and presents sufficient orthodontic effects.

The present invention provides a process for producing an orthodontic bracket, which comprises moulding an alumina powder having an average particle size of at most 0.2 $\mu$m (micrometers) and a purity of at least 99.9% by weight into a moulded product having a desired shape and a bulk density of at least 55% of the theoretical density, sintering the moulded product within a temperature range of from 1,300 to 1,400 °C to a bulk density of at least 98% of the theoretical density, and then subjecting the sintered product to hot isostatic press treatment (HIP) within a temperature range of from 1,400 to 1,550 °C under a pressure of at least 500 atm.

The orthodontic bracket can be prepared by cutting and milling a sintered material or by forming a moulded product of a bracket shape by slip casting moulding or injection moulding, and sintering it after the removal of a binder to obtain a sintered product of a bracket shape, followed by polishing the surface. However, it is practically impossible to mould a complicated shape like an orthodontic bracket by a slip casting moulding method. On the other hand, cutting and milling a sintered material formed by press moulding are disadvantageous because of poor productivity. Besides, such products are inferior in both translucence and strength to a product produced by an injection moulding method.

The invention may be put into practice in various ways and a number of specific embodiments will be described to illustrate the invention with reference to the accompanying drawings, in which:

Figure 1 is a perspective view of an orthodontic bracket prepared in accordance with Example 1;

Figure 2 is a scanning electron microscopic photograph showing the crystal structure on the fracture surface of the alumina ceramic of Example 1 produced in the Physical Property Measurement; and

Figure 3 is a graph showing the transmittance of visible light (400-800 nm) of a sample having a thickness of 1 mm of the alumina ceramic of Example 2 used in the Physical Property Measurement.

In the present invention, if the alumina content is lower than the above mentioned range (at least 99.9%), the product tends to have a structure having impurities precipitated along the grain boundaries, which cause light scattering, whereby it becomes difficult to obtain sufficient translucence within the above mentioned grain size range (1.8 to 3.0 microns). Further, if the grain size of the crystals of the sintered product exceeds the above range, adequate strength tends to be difficult to obtain, and if the grain size is smaller than the above range, it becomes difficult to obtain a transmittance of light having a wavelength of 600 nm passing through a sample thereof having a thickness of 1 mm of at least 5%. For a bracket material, high light transmittance and high flexural strength are required. If the light transmittance is lower than the above mentioned range, the appearance of the bracket when mounted on the tooth tends to be poor. If the strength is lower than the above mentioned range, the bracket is likely to be broken in the mounted state when a wire is tightened in the narrow slit within the bracket.

Heretofore, alumina used to be sintered at a temperature at least 1,500 °C. However, if it is sintered at such a high temperature, it is only possible to obtain a sintered body having a large grain size and low strength. According to the present invention, the grain size of the product obtained by HIP treatment can be made to be within a range of from 1.8 to 3.0 um by sintering the molded product at a temperature of from 1,300 to 1 ,400°C prior to HIP treatment. Further, in order to eliminate voids by the HIP treatment, it is necessary to increase the density to a level of at least 98% of the theoretical density. In order to sinter the molded product at a temperature of from 1,300 to 1,400°C to the one having a bulk density of at least 98% of the theoretical density, it is necessary to bring the purity of the starting material, the particle size and the bulk density during the molding within the above mentioned ranges. In order to increase the bulk density during the molding, an aluina powder having low agglomeration properties should be selected. Even if the above conditions are outside the required ranges, it may be possible to obtain a product having a bulk density of at least 98% of the theoretical density by conducting sintering at a high temperature. However, in such case, the crystal grains are likely to grow so much that it is hardly possible to obtain a sintered body having a grain size within the above mentioned range of from 1.8 to 3.0 um. Further, impurities in the starting material tend to precipitate along the grain boundaries and thus impair the light transmitting properties of the product. Therefore, the purity of alumina starting material is required to be at least 99.9% by weight. To obtain a high level of translucence, it is necessary to apply HIP treatment. If the treating temperature is lower than the above range, voids tend to remain, whereby no adequate light transmittance can be obtained. If the temperature exceeds the above range, the particle size in the product tends to excess 3.0 um, whereby the strength tends to be inadequate. With respect to the pressure condition, so long as the pressure is at least 500 atm, there is no substantial difference in its effects, below this value the product tends to have poor translucence.

The atmosphere is preferably argon or oxygen. The light transmittance through a thickness of 1 mm of the bracket thus obtained is at least 1% with light having a wavelength of 400 nm, at least 5% with light having a wavelength of 600 nm and at least 10% with light having a wavelength of 800 nm. Thus, there is no noticeable absorption within the entire range of the visible region (from 400 to 800 pm).

The translucent alumina bracket of the present invention has excellent rigidity and exhibits excellent slippage with a metal wire to provide adequate orthodontic effects. Further, it has excellent translucence prperties and thus excellent appearance. The strength is high so that it is unlikely to break when mounted, and the psychological pain of the patient can remarkably be reduced. It will, of course, not be eroded by e.g. saliva and is harmless to the human body. The process of the present invention enables such an orthodontic bracket easily to be produced.

Now, the present invention will be described with reference to Examples. However, it should be understood that the present invention is by no means restricted to such specific Examples.

EXAMPLE 1

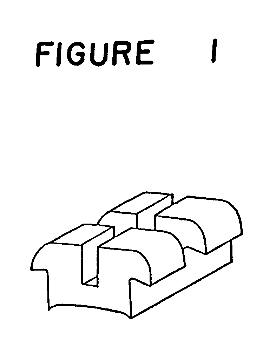

An organic binder composed mainly of a thermoplastic resin was added to fine alumina powder (Taimicron TM-DAR, manufactured by Taimei Kagaku K.K., purity: 99.99 wt%, average particle size: 0.1 um, hereinafter referred to simply as powder A) to obtain a compound having a powder volume rate of 56%. This compound was injection molded into the shape shown in Figure 1.

The molded product thus obtained was heated to remove the organic binder and then sintered in the atmosphere at a temperature of 1,350°C.

The sintered product thus obtained was subjected to HIP treatment. This treatment was conducted at 1,500°C under a pressure of 1,500 atm in an argon atmosphere for one hour. This sintered product was subjected to barrel polishing treatment to obtain a translucent alumina orthodontic bracket.

In Figure 1, the slit in the longitudinal direction is a slit for an orthodontic wire to pass therethrough.

PHYSICAL PROPERTY MEASUREMENT FOR EXAMPLES 1 TO 6 AND COMPARATIVE MESUREMENT EXAMPLES 1 TO 6

Using two types of fine alumina powders (powder A and AKP 30 manufactured by Sumitomo Chemical Company Limited, purity: 99.99 wt%, average particle size: about 0.2 um (hereinafter referred to simply as powder B)), the molding and the sintering were conducted under the conditions for the sintering temperature and the temperature and pressure for HIP treatment as shown in Table 1. With respect to each sintered product thus obtained, a three point flexural test was conducted in accordance with JIS R-1601-1981 to determine the strength. Further, the light transmittance through a sample having a thickness of 1 mm (using light of wavelength = 600 nm) was also measured. The results thereby obtained are shown in Table 1.

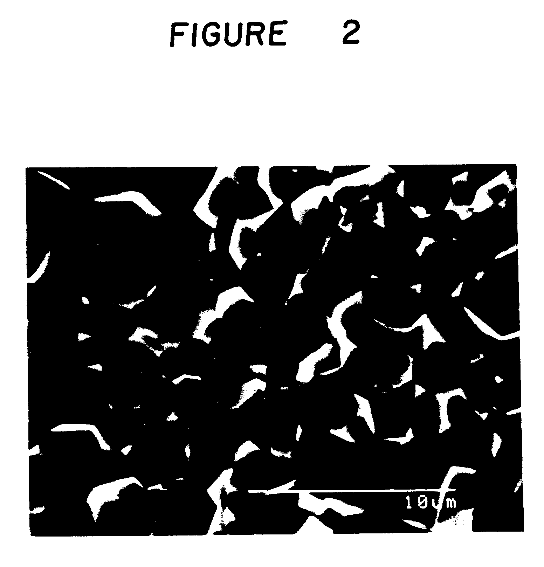

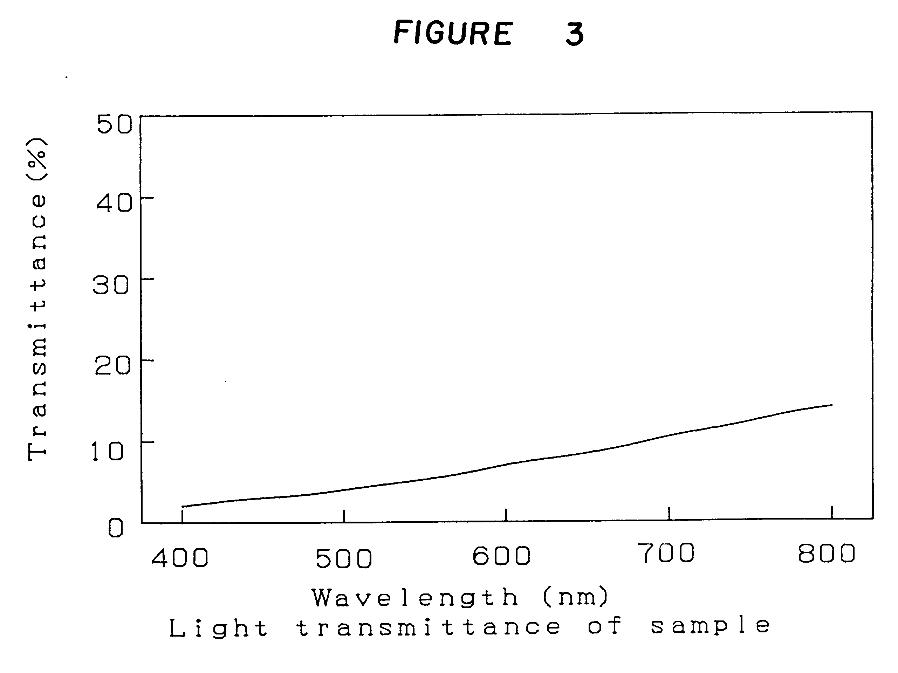

Further, as an example of the structure of a sintered product, a scanning electron microscopic photograph of the fracture surface of the sintered product obtained in Physical Property Measurement Example 1, is shown in Figure 2. Further, the light transmittance in the visible range of the sintered product obtained in the Physical Property Measurement of Example 2 is shown in Figure 3. From these results, the product of the process of the present invention, particularly the one obtained by the process whereby molding was conducted by injection molding, can be seen to be excellent as an orthodontic bracket.

Table 1

| | | Powder | Molding method | Molded density (%) | Primary sintering temp. (°C) | HIP temp. (°C) | HIP pressure (atm) | Grain size (μm) | Light transmittance (%, 1 mm, 600 nm) | Flexural strength (kg/mm²) |
|---|---|---|---|---|---|---|---|---|---|---|
| Physical Property Measurement Examples | 1 | A | Injection molding | 56 | 1,350 | 1,500 | 1,500 | 2.1 | 9.5 | 61 |
| | 2 | A | Injection molding | 56 | 1,350 | 1,400 | 1,500 | 1.8 | 6.9 | 64 |
| | 3 | A | Injection molding | 56 | 1,400 | 1,500 | 1,500 | 2.2 | 9.2 | 58 |
| | 4 | A | Injection molding | 56 | 1,350 | 1,550 | 1,500 | 2.5 | 10.2 | 53 |
| | 5 | A | Injection molding | 56 | 1,350 | 1,500 | 500 | 2.2 | 9.2 | 60 |
| | 6 | A | Cold isostatic press | 58 | 1,350 | 1,500 | 1,500 | 2.1 | 6.9 | 56 |
| Comparative Measurement Examples | 1 | B | Cold isostatic press | 52 | 1,350 | 1,500 | 1,500 | 3.5 | 1.5 | 48 |
| | 2 | A | Injection molding | 56 | 1,350 | 1,350 | 1,500 | 1.5 | 3.6 | 74 |
| | 3 | A | Injection molding | 56 | 1,350 | 1,600 | 1,500 | 3.4 | 12.0 | 46 |
| | 4 | A | Injection molding | 56 | 1,250 | 1,400 | 1,500 | 1.8 | 2.2 | 40 |
| | 5 | A | Injection molding | 56 | 1,500 | 1,500 | 1,500 | 3.2 | 8.0 | 45 |
| | 6 | A | Injection molding | 56 | 1,350 | – | – | 1.5 | 0 | 64 |

## Claims

1. A process for producing an orthodontic bracket, characterised in that it comprises molding an alumina powder having an average particle size of at most $0.2\mu m$ (micrometres) and a purity of at least 99.9% by weight into a molded product having a desired shape and a bulk density of at least 55% of the theoretical density, sintering the molded product within a temperature range of from 1,300 to 1,400 °C to a bulk density of at least 98% of the theoretical density, and then subjecting the sintered product to hot isostatic press treatment within a temperature range of from 1,400 to 1,550 °C under pressure of at least 500 atm.

2. A process as calmed in Claim 1, characterised in that the alumina powder is molded by injection molding.

3. A process as claimed in Claim 1 or Claim 2, characterised in that the hot isostatic press treatment is conducted in an atmosphere of argon or oxygen.

## Patentansprüche

1. Verfahren zum Herstellen eines orthodontischen Brakkets, **dadurch gekennzeichnet**, daß es folgendes umfaßt: Formen eines Aluminiumoxidpulvers mit einer mittleren Teilchengröße von höchstens 0,2 $\mu$m (Mikrometer) und einer Reinheit von mindestens 99,99 Gew.-% zu einem Formerzeugnis mit gewünschter Form und einer Volumendichte von mindestens 55 % der theoretischen Dichte; Sintern des Formerzeugnisses im Temperaturbereich von 1.300 bis 1.400 °C auf eine Volumendichte von mindestens 98 % der theoretischen Dichte und dann Unterziehen des Sintererzeugnisses einer heißisostatischen Preßbehandlung im Temperaturbereich von 1.400 bis 1.550 °C bei einem Druck von mindestens 500 atm.

2. Verfahren nach Anspruch 2, **dadurch gekennzeichnet**, daß das Aluminiumoxidpulver durch Spritzgießen geformt wird.

3. Verfahren nach Anspruch 1 oder Anspruch 2, **dadurch gekennzeichnet**, daß die heißisostatische Preßbehandlung in einer Atmosphäre aus Argon oder Sauerstoff ausgeführt wird.

## Revendications

1. Procédé de fabrication d'un support orthodontique, caractérisé par le fait qu'il comprend :
   - le moulage d'une poudre d'alumine ayant une dimension moyenne de particule d'au plus 0,2 $\mu$m (micromètre) et une pureté d'au moins 99,9% en poids en un produit moulé présentant une forme désirée et une densité apparente d'au moins 55% de la densité théorique,
   - le frittage du produit moulé à l'intérieur d'une plage de température allant de 1300 à 1400 °C, jusqu'à une densité apparente d'au moins 98% de la densité théorique, puis
   - l'opération consistant à soumettre le produit fritté à un traitement de compression isostatique à chaud, à l'intérieur d'une plage de température allant de 1400 à 1550 °C, sous une pression d'au moins 500 atm.

2. Procédé selon la revendication 1, caractérisé par le fait que la poudre d'alumine est moulée par moulage par injection.

3. Procédé selon la revendication 1 ou la revendication 2, caractérisé par le fait que le traitement de compression isostatique à chaud est conduit dans une atmosphère d'argon ou d'oxygène.

FIGURE  I

# FIGURE 2

## FIGURE 3

Light transmittance of sample

EP 0 430 654 B1